# EUROPÄISCHE PATENTANMELDUNG

(11) **EP 4 566 844 A1**
(43) Veröffentlichungstag der Anmeldung: **11.06.2025**
(21) Anmeldenummer: 24212268.7
(22) Anmeldetag: 12.11.2024
(51) Int. Cl.: B60C 11/16

(54) **FAHRZEUGLUFTREIFEN**

(30) Priorität: 04.12.2023 DE 102023212196
(71) Anmelder: Continental Reifen Deutschland GmbH, 30175 Hannover (DE)
(72) Erfinder: Spechtmeyer, Torben, 30175 Hannover (DE); Schlittenhard, Jan, 30175 Hannover (DE); Wackerhage, Tanja, 30175 Hannover (DE); Gleeson, Ruaidhri, 30175 Hannover (DE)
(74) Vertreter: Continental Corporation

(57) **Zusammenfassung**

Die Erfindung betrifft einen Fahrzeugluftreifen mit in einer Lauffläche (1a) angeordneten Spikelöchern (3), in denen jeweils ein Spike (2) mit einem oberen Abschnitt (6a), einem unteren Abschnitt (6b) und einem Fußabschnitt (6c) eingebracht ist,
wobei der obere Abschnitt (6a) des Spikes (2) durch einen Pin (5) gebildet ist, wobei der Pin (5) innerhalb des oberen Abschnittes (6a)
- einen Stützabschnitt (5c) aufweist, der innerhalb der Lauffläche (1a) angeordnet ist und der sich mit einer Außenseite (17) direkt an der Lauffläche (1a) abstützt, und
- einen hervorstehenden Abschnitt (5b) aufweist, der aus der Lauffläche (1a) herausragt.

Erfindungsgemäß ist vorgesehen, dass ein unteres Querschnittsmaß (Qb) des unteren Abschnittes (6b) des Spikes (2) größer oder gleich einem Trenn-Querschnittsmaß (QT) ist, das der obere Abschnitt (6a) an einer Trennlinie (TL) einnimmt, die den oberen Abschnitt (6a) des Spikes (2) von dem unteren Abschnitt (6b) des Spikes (2) trennt.

## Beschreibung

Die Erfindung betrifft einen Fahrzeugluftreifen mit Spikes gemäß dem Oberbegriff des Anspruches 1.

Spikereifen, d.h. Fahrzeugluftreifen mit umfangsseitig angeordneten Spikes, weisen üblicherweise Spikes auf, die aus Metall gefertigt sind. Ein Spikekörper des jeweiligen Spikes besteht dazu normalerweise aus Stahl oder Aluminium und ein Pin des Spikes, der in dem Spikekörper aufgenommen oder eingebettet ist und aus diesem oberseitig herausragt, ist normalerweise aus einem Hartmetall oder Stahl gefertigt. Für den Pin ist ein härteres Material gewählt als für den Spikekörper, da der Pin in das Eis auf der Fahrbahn eindringt und über diesen die Kräfte übertragen werden. Der Spikekörper hingegen sollte verschleißfest sein, um den Pin über die gesamte Lebensdauer des Fahrzeugluftreifens zu stützen.

Weiterentwicklungen eines solchen Spikes betreffen das Material des Spikekörpers, der wie beispielsweise in EP 3 543 039 B1 beschrieben, aus einem Gummimaterial besteht, das insbesondere den Pin seitlich umgibt und diesen auch seitlich abstützt. Diese Spikes haben den Vorteil einer besseren Eisperformance und einer verbesserten Verschleißfestigkeit.

Beide Arten von Spikes, d.h. herkömmliche Spikes mit Spikekörpern aus Metall und Spikes mit Spikekörpern aus Gummi, werden mechanisch und/oder chemisch mit dem Fahrzeugluftreifen verbunden, wobei ein Verfahren zur chemischen Verbindung beispielsweise in EP 2 255 959 B1 oder EP 2 777 923 A1 beschrieben ist. Demnach wird als ein Haftsystem oder ein Haftvermittler eine trockene Beschichtung auf den Spikekörper aufgetragen und der Spikekörper anschließend in vorgefertigte Spikelöcher im Fahrzeugluftreifen gepresst, wie beispielsweise auch in EP 2 641 754 B1 oder US 10 232 672 B2 beschrieben. Durch Induktionsheizen (oder eine andere Art der Wärmeerzeugung, beispielsweise in einem Autoklav) wird die trockene Beschichtung auf dem Spikekörper anschließend durch Wärme aktiviert und dadurch eine chemische Verbindung zwischen dem Spikekörper und dem Fahrzeugluftreifen hergestellt.

Bei Fahrzeugluftreifen mit derartigen Spikes besteht ein Zielkonflikt zwischen der Eisperformance und der Verschleißfestigkeit im Betrieb des Fahrzeugluftreifens. Da es für die Verschleißfestigkeit gesetzliche Grenzen gibt, ist die Eisperformance limitiert, insbesondere für Spikekörper aus Stahl oder Aluminium. Bei Spikes mit Spikekörpern aus Gummi hingegen schränkt dieser Zielkonflikt weniger stark ein, allerdings verschlechtert sich für derartige Spikes die Dauerhaltbarkeit des Spikes am Fahrzeugluftreifen. Dadurch erhöht sich das Risiko, während der Lebensdauer des Fahrzeugluftreifens einen Spike zu verlieren. Die Ursache ist insbesondere in dem Haftvermittler zwischen dem Gummimaterial des Spikekörpers und dem Gummimaterial des Fahrzeugluftreifens zu sehen, wobei der Haftvermittler bei einer Gummi-Gummi-Verbindung im Vergleich zu einer Metall-Gummi-Verbindung im Hinblick auf die Dauerhaltbarkeit weniger beständig ist. Daher kann es zu einer Beschädigung in der chemischen Verbindung zwischen dem Spikekörper aus Gummi und dem Fahrzeugluftreifen kommen, was zu einem Verlust des jeweiligen Spikes führen kann. Weiterhin kann es aber auch zu Beschädigungen in der Verbindung zwischen dem Pin und dem Spikekörper aus Gummi kommen, wodurch sich eine offene Verbindung zwischen beiden ausbilden kann, in der sich wiederum Sand und Schmutz einlagern kann. Dadurch können die Dauerhaltbarkeit und auch der Verschleiß zusätzlich beeinträchtigt werden.

Weitere Spikes sind in RU 2292269 C2 beschrieben, wobei darin vorgesehen ist, einen Pin aus einem Verbundmaterial aus Metall und Keramik zu verwenden, wobei der Pin in seinem unteren Abschnitt über eine Taille oder eine Verengung in den Fußabschnitt übergeht. In US 8 215 354 B2 ist ferner ein Spike vorgesehen, der mehrere Pins innerhalb eines kompressiblen Materials aufweist, wobei die Pins nicht aus dem kompressiblen Material und auch nicht aus der Lauffläche hervorragen.

Zum Einbringen der Spikelöcher in den Fahrzeugreifen ist normalerweise vorgesehen, auf einer Oberfläche eines Vulkanisationssegmentes einer Vulkanisationsvorrichtung senkrecht abstehende Formstifte (Mold-Pin) bereitzustellen, die beim Vulkanisierungsvorgang in die Lauffläche ragen und dadurch das Spikeloch ausbilden. Ein Fixierungsabschnitt des Formstifts dient dabei der Fixierung des Formstifts in dem Vulkanisationssegment und sich daran anschließende Formabschnitte formen das eigentliche Spikeloch, in das der Spike nachfolgend eingepresst wird.

Beim Entformen des Fahrzeugluftreifens kann es ja nach Dimension des Formstifts zu einem Abbrechen oder Beschädigen des Formstiftes kommen. In EP 2719523 B1 ist dazu beschrieben, dass ein Fuß-Formabschnitt, der den Fußabschnitt des Spikes nachbildet, aus mehreren Segmenten besteht, die beim Entformen umklappen, so dass sich ein Durchmesser des Fuß-Formabschnitts verkleinert, was das Entformen erleichtert.

In JP 6690927 B2 stehen Betätigungsabschnitte in Längsrichtung senkrecht von dem Fixierungsabschnitt des Formstifts ab, die radial nach außen hin immer höher werden und dabei einen sich an den Fixierungsabschnitt nach oben hin anschließenden oberen Formabschnitt nicht berühren. Diese Betätigungsabschnitte dienen der Betätigung des Formstifts, um diesen einfacher in ein Gewinde am Vulkanisationssegment eindrehen oder aus diesem herausdrehen zu können.

Der folgenden Erfindung liegt die Aufgabe zugrunde, einen Fahrzeugluftreifen mit Spikes bereitzustellen, mit dem eine Dauerhaltbarkeit des Spikes am Fahrzeugluftreifen bei gleichbleibender oder verbesserter Verschleißfestigkeit und Eisperformance erhöht wird.

Diese Aufgabe wird durch einen Fahrzeugluftreifen gemäß dem unabhängigen Anspruch gelöst. Die Unteransprüche geben bevorzugte Weiterbildungen an.

Erfindungsgemäß ist demnach ein Fahrzeugluftreifen mit einer Lauffläche und in der Lauffläche angeordneten Spikelöchern vorgesehen, wobei in den Spikelöchern jeweils ein Spike eingebracht ist, wobei der jeweilige Spike in Längsrichtung aneinandergrenzend einen oberen Abschnitt, einen unteren Abschnitt und einen Fußabschnitt aufweist,
wobei der obere Abschnitt des Spikes durch einen Pin gebildet ist, wobei der Pin innerhalb des oberen Abschnittes
   - einen Stützabschnitt aufweist, der innerhalb der Lauffläche angeordnet ist und der sich mit einer Außenseite direkt an der Lauffläche abstützt, so dass der Stützabschnitt des Pins keine zusätzliche stützende Ummantelung oder Umhüllung aufweist, und weiterhin
   - einen hervorstehenden Abschnitt aufweist, der aus der Lauffläche herausragt, so dass ein freies Ende des Pins von der Lauffläche hervorsteht; und wobei ein oberes Querschnittsmaß innerhalb des oberen Abschnittes des Spikes über eine gesamte obere Längsausdehnung des oberen Abschnittes kleiner ist als ein Fuß-Querschnittsmaß des Fußabschnittes des Spikes zum Verankern des jeweiligen Spikes in dem Spikeloch, und
wobei ein unteres Querschnittsmaß des unteren Abschnittes des Spikes über eine gesamte untere Längsausdehnung des unteren Abschnitts und bevor der untere Abschnitt in den Fußabschnitt übergeht größer oder gleich einem Trenn-Querschnittsmaß ist, das der obere Abschnitt an einer (oder vor einer) Trennlinie einnimmt, die den oberen Abschnitt des Spikes von dem unteren Abschnitt des Spikes trennt.

Demnach wird in dem Fahrzeugluftreifen also ein Spike bereitgestellt, der einen schmalen oder schlanken oberen Abschnitt mit einem oberen Querschnittsmaß von beispielsweise zwischen 1.5mm und 4mm aufweist, der vorzugsweise unummantelt oder unumhüllt ist und der in einen breiter werdenden unteren Abschnitt mit einem unteren Querschnittsmaß von beispielsweise zwischen 1.5mm und 7mm und Fußabschnitt mit einem Fuß-Querschnittsmaß von beispielsweise zwischen 6mm und 11mm übergeht. Bei einem solchen Spike kann der schmale und unummantelte Pin, der den oberen Abschnitt des Spikes ausbildet und beispielsweise aus einem Hartmetall gefertigt ist, direkt an der Lauffläche anliegen. Der Pin, der die Kräfte vom Eis aufnimmt und ableitet, wird also lediglich durch die Lauffläche abgestützt, was die Dauerhaltbarkeit und die Eisperformance sowie auch die Verschleißfestigkeit verbessert. Zudem kann auf eine zusätzliche Ummantelung verzichtet werden, da die Abstützwirkung allein von der Lauffläche erzielt werden kann, so dass Material und Herstellungsaufwand gespart werden können. Der mechanische Halt am Fahrzeugluftreifen wird allein durch den breiter werdenden unteren Abschnitt und den Fußabschnitt gewährleistet.

Vorzugsweise ist dabei vorgesehen, dass der Spike einteilig bzw. als eine baulichen Einheit oder mindestens zweiteilig gefertigt ist. Bei einer einteiligen Ausführung kann der Herstellungsaufwand minimiert werden, wobei in dem Fall der gesamte Spike aus einem Hartmetall gefertigt ist, so dass der Pin, der den oberen Abschnitt des Spikes ausbildet, die entsprechenden Kräfte vom Eis aufnehmen kann. Bei einer mindestens zweiteiligen Ausführung ist der Spike in dem unteren Abschnitt und/oder in dem Fußabschnitt aus Aluminium gefertigt oder weist Aluminium auf. Demnach ist lediglich der relevante Teil, der Pin, aus einem Hartmetall gefertigt, um die Kräfte aufnehmen zu können, und der untere Teil und/oder der Fußabschnitt aus einem weicheren und damit auch leichteren Material, so dass Kosten und auch Gewicht gespart werden können.

Vorzugsweise ist weiterhin vorgesehen, dass der Spike in dem unteren Abschnitt durch einen Unterflansch mit dem unteren Querschnittsmaß gebildet ist und der Fußabschnitt durch einen Fußflansch mit dem Fuß-Querschnittsmaß, wobei der Unterflansch und der Fußflansch einteilig gefertigt sind. Eine einteilige Ausführung der beiden Flansche bzw. Abschnitte vermindert den Herstellungsaufwand und die Dauerhaltbarkeit.

Vorzugsweise ist weiterhin vorgesehen, dass ein unteres Ende des Pins bei
- einer mindestens zweiteiligen Ausführung des Spikes an den Unterflansch angefügt ist, beispielsweise in den Unterflansch eingepresst, beispielsweise in einer Einpresstiefe von zwischen 2.5mm und 5mm, und/oder mit dem Unterflansch stoffschlüssig verbunden ist, und der Unterflansch aus Aluminium gefertigt ist, und
- bei einer einteiligen Ausführung des Spikes einteilig in den Unterflansch übergeht. Auf diese Weise wird ein geeigneter Übergang zwischen dem Pin bzw. dem oberen Abschnitt des Spikes und dem unteren Abschnitt und dem Fußabschnitt des Spikes bereitgestellt, um den Pin sicher am Fahrzeugreifen mechanisch verankern zu können.

Vorzugsweise ist weiterhin vorgesehen, dass die Außenseite des Stützabschnittes des Pins innerhalb des oberen Abschnittes im Bereich des Spikeloches direkt an der Lauffläche anliegt, und optional über einen Haftvermittler direkt mit der Lauffläche stoffschlüssig verbunden ist. Demnach sind keine zusätzlichen abstützenden Schichten zwischen dem oberen Abschnitt des Spikes bzw. des Pins und der Lauffläche vorgesehen, so dass Material gespart werden kann und gleichzeitig die Dauerhaltbarkeit, Eisperfomance und Verschleißfestigkeit erhöht werden können. Der Haftvermittler kann für eine zusätzliche chemische Verbindung auch im oberen Abschnitt sorgen.

Vorzugsweise ist weiterhin vorgesehen, dass das untere Querschnittsmaß des unteren Abschnittes des Spikes ausgehend von der Trennlinie in Richtung des Fußabschnittes des Spikes zumindest bereichsweise größer wird. Der untere Abschnitt wird also ausgehend von der Trennlinie breiter, insbesondere auch breiter als der obere Abschnitt, so dass auch bereits der untere Abschnitt zusätzlich zum Fußabschnitt zu einer mechanischen Befestigung beitragen kann. Ergänzend wird durch die Aufweitung eine größere Fläche bereitgestellt, mit der der untere Abschnitt an der Lauffläche anliegt, so dass eine verbesserte Abstützwirkung an der Lauffläche im Bereich des Spikelochs gegeben ist und auch der optionale Haftvermittler auf einer größeren Fläche wirkt.

Vorzugsweise ist weiterhin vorgesehen, dass das untere Querschnittsmaß des unteren Abschnittes des Spikes ausgehend von der Trennlinie
- über die gesamte untere Längsausdehnung des unteren Abschnitts stets größer wird oder zumindest nicht kleiner wird, beispielsweise linear, gestuft oder abgerundet, oder
- zunächst bis zu einem oberen Scheitelpunkt größer wird, beispielsweise linear, gestuft oder abgerundet, und anschließend bis zu einem unteren Scheitelpunkt wieder kleiner wird, beispielsweise linear, gestuft oder abgerundet, so dass sich eine Einkerbung in dem Spike ausbildet, wobei das untere Querschnittsmaß in dem unteren Scheitelpunkt größer oder gleich
- dem oberen Querschnittsmaß ist, das der obere Abschnitt über die gesamte obere Längsausdehnung einnimmt, und/oder
- dem Trenn-Querschnittsmaß ist, das der obere Abschnitt an der Trennlinie einnimmt.

Demnach kann der untere Abschnitt also ausgehend von der Trennlinie kontinuierlich breiter werden, beispielsweise konisch, oder zumindest nicht schmaler werden, beispielsweise zylindrisch, und anschließend in den Fußabschnitt übergehen. Dadurch ist eine hohe Stabilität gegeben und gleichzeitig wird eine gute Abstützwirkung und optional eine gute Verbindung mit der Lauffläche über eine große Fläche ermöglicht, was den mechanischen Halt des Spikes am Fahrzeugluftreifen verbessert. Dies kann auch dadurch erreicht werden, dass die zusätzliche Einkerbung eingebracht wird, die dann aber nicht zu einem zu eng taillierten oder eingeschnürten unteren Abschnitt führt. Vielmehr bleibt das untere Querschnittsmaß in dem unteren Scheitelpunkt größer oder gleich dem Trenn-Querschnittsmaß.

Vorzugsweise ist weiterhin vorgesehen, dass das untere Querschnittsmaß des unteren Abschnittes des Spikes stets größer ist als das obere Querschnittsmaß des oberen Abschnitts des Spikes. Die Form des Pins bzw. oberen Abschnitts wird also derartig festgelegt, dass dieser immer schmaler oder schlanker ist als der untere Abschnitt und der Fußabschnitt des Spikes, was die mechanische Verankerung verbessert.

Vorzugsweise ist weiterhin vorgesehen, dass der obere Abschnitt des Spikes konisch oder zylindrisch verläuft und/oder der untere Abschnitt des Spikes konisch oder zylindrisch verläuft, wobei beide Abschnitt beispielsweise stufenartig ineinander übergehen können oder aber kontinuierlich. Dadurch ist eine flexible Auswahl der Form der verschiedenen Abschnitte möglich, wodurch sich die Stabilität oder die Eigenschaft des Spikes und der Herstellungsaufwand entsprechend anpassen lässt.

Vorzugsweise ist weiterhin vorgesehen, dass die obere Längsausdehnung des oberen Abschnitts des Spikes größer oder gleich einer Profiltiefe der Lauffläche ist, so dass die Trennlinie unterhalb oder auf der Profiltiefe liegt, wobei die obere Längsausdehnung des oberen Abschnitts des Spikes beispielsweise zwischen 3mm und 10mm, vorzugsweise zwischen 4mm und 7mm beträgt. Dadurch wird erreicht, dass der Spike lediglich mit dem Pin aus der Lauffläche herausragt und der breitere untere Abschnitt und Fußabschnitt, wenn überhaupt dann erst bei sehr starker Abnutzung des Fahrzeugluftreifens aus der Lauffläche hervortreten. Dadurch kann eine erhöhte Einwirkung auf die Straße vermieden werden, da lediglich der schmale bzw. schlanke Teil, der für die Aufnahme von Kräften vom Eis benötigt wird, auf die Straße einwirkt.

Vorzugsweise ist weiterhin vorgesehen, dass die untere Längsausdehnung des unteren Abschnitts und eine Fuß-Längsausdehnung des Fußabschnitts zusammen beispielsweise mindestens 4mm, vorzugsweise zwischen 4mm und 8mm, betragen, wobei die untere Längsausdehnung vorzugsweise größer oder gleich der Fuß-Längsausdehnung ist. Auf diese Weise wird eine gute mechanische Verankerung oder Befestigung im Fahrzeugluftreifen gewährleistet.

Vorzugsweise ist weiterhin vorgesehen, dass das obere Querschnittsmaß des oberen Abschnitts des Spikes zwischen 1.5mm und 4mm beträgt. Derartige obere Querschnittsmaße sind ausreichend, um effektiv Kräfte vom Eis ableiten zu können, insbesondere bei einem Pin, der aus einem Hartmetall gefertigt ist, beispielsweise aus Wolframcarbid.

In den Zeichnungen zeigen:
Fig. 1 einen Ausschnitt einer Lauffläche eines Fahrzeugluftreifens;
Fig. 2 - 5 Detailansichten des Spikes gemäß Fig. 1 in unterschiedlichen Ausführungsformen; und
Fig. 6, 7 Detailansichten eines Formstifts als Bestandteil einer Vulkanisationsvorrichtung.

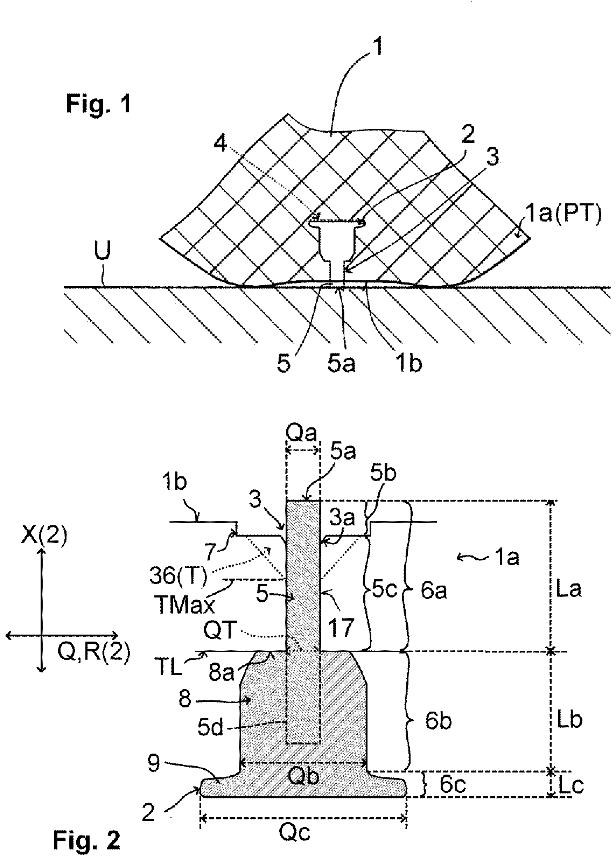

Figur 1 zeigt schematisch einen Ausschnitt eines Fahrzeugluftreifens 1, insbesondere Fahrzeugluftreifens, der auf einem Untergrund U abrollt und der auf seinem Umfang verteilt mehrere Spikes 2 aufweist. Unter einem Spike 2 wird dabei eine Art Stift oder Bolzen verstanden, der wie dargestellt in die profilierte Lauffläche 1a des Fahrzeugluftreifens 1 eingesetzt und darin verankert ist. Dazu werden bei der Herstellung des Fahrzeugluftreifens 1 in der Lauffläche 1a in bekannter Weise mehrere Spikelöcher 3 eingebracht, in die der jeweilige Spike 2 mechanisch eingepresst wird. Optional können anschließend der Fahrzeugluftreifen 1 und der eingepresste Spike 2 durch einen Haftvermittler 4 chemisch bzw. stoffschlüssig miteinander verbunden werden. Bei dem Haftvermittler 4 handelt es sich vorzugsweise um einen trockenen Haftvermittler 4, beispielsweise Parlock, Chemlock oder Chemosil, mit dem der Spike 2 vor dem Einpressen in das jeweilige Spikeloch 3 beschichtet wird. Der Haftvermittler 4 wird nach dem Einpressen des Spikes 2 in das jeweilige Spikeloch 3 durch eine gezielte Wärmebehandlung aktiviert, um die chemische Verbindung auszubilden.

Jeder Spike 2 weist wie in Fig. 2 in einer Detailansicht dargestellt einen in Längsrichtung X verlaufenden Pin 5 auf, der mit seinem freien Ende 5a im in das jeweilige Spikeloch 3 eingepressten Zustand aus der Lauffläche 1a herausragt bzw. hervorsteht. Der Spike 2 wird in einem oberen Abschnitt 6a lediglich durch diesen Pin 5 ausgebildet, d.h. in diesem oberen Abschnitt 6a ist keine Ummantelung oder Umhüllung vorgesehen. Der obere Abschnitt 6a deckt dabei nicht nur einen hervorstehenden Abschnitt 5b des Pins 5 ab, der im in das jeweilige Spikeloch 3 eingepressten Zustand aus der Lauffläche 1a herausragt bzw. hervorsteht, sondern auch einen Stützabschnitt 5c des Pins 5, der im in das jeweilige Spikeloch 3 eingepressten Zustand von dem Gummimaterial der Lauffläche 1a umfangsseitig umgeben ist. Der Pin 5 wird also in diesem Stützabschnitt 5c lediglich durch das umgebende Gummimaterial der Lauffläche 1a abgestützt, d.h. eine Außenseite 17 des Pins 5 liegt direkt an der Lauffläche 1a an.

Der hervorstehende Abschnitt 5b oder der Stützabschnitt 5c des Pins 5 bzw. der obere Abschnitt 6a des Spikes 2 weist ein oberes Querschnittsmaß Qa auf, das zwischen 1.5mm und 4mm beträgt, wobei das obere Querschnittsmaß Qa die Querausdehnung (in Querrichtung Q oder radialer Richtung R bezüglich des Spikes 2) in diesem oberen Abschnitt 6a (5b, 5c) des Spikes 2 charakterisiert. Das obere Querschnittsmaß Qa kann über eine obere Längsausdehnung La (Ausdehnung in Längsrichtung X) des oberen Abschnittes 6a variieren, beispielsweise bei einem konischen Verlauf des oberen Abschnitts 6a. Das obere Querschnittsmaß Qa kann bei einem runden Querschnitt beispielsweise durch einen Durchmesser oder bei einem nicht-runden Querschnitt durch einen lichten Durchmesser oder eine Breite gegeben sein. Der Pin 5 kann dabei in axialer Richtung (bezüglich des Fahrzeugreifens 1) breiter sein als in Umfangsrichtung (bezüglich des Fahrzeugreifens 1), so dass sich in Umfangsrichtung eine gute Griffkante und damit eine verbesserte Griffigkeit auf dem Untergrund, insbesondere dem Eis, ergibt.

Um bei einem solchen oberen Querschnittsmaß Qa Kräfte vom Eis auf dem Untergrund U effizient aufnehmen zu können, ist der Pin 5 aus einem Hartmetall gefertigt, beispielsweise aus Wolframcarbid oder einem anderen rein metallischen Material. Die obere Längsausdehnung La des oberen Abschnitts 6a wird vorzugsweise in Abhängigkeit einer Profiltiefe PT der Lauffläche 1a gewählt. Dadurch wird gewährleistet, dass auch im abgenutzten Zustand des Fahrzeugreifens 1 möglichst lang ein unumhüllter Bereich des Pins 5 aus der (abgenutzten) Lauffläche 1a heraustritt oder herausragt. Die obere Längsausdehnung La des oberen Abschnitts 6a kann dazu beispielsweise mindestens 3mm betragen, vorzugsweise zwischen 3mm und 10mm, insbesondere zwischen 4mm und 7mm.

Ein unterer Abschnitt 6b des Spikes 2 kann unterschiedliche Ausführungen haben, die nachfolgend näher beschrieben werden:
Gemäß der in Fig. 2 dargestellten Ausführungsform wird der Spike 2 ab einer Trennlinie TL, die den oberen Abschnitt 6a von dem unteren Abschnitt 6b des Spikes 2 trennt, nach unten (in Längsrichtung X) zu einem Fußabschnitt 6c des Spikes 2 hin breiter. Ein unteres Querschnittsmaß Qb, das die Querausdehnung in dem unteren Abschnitt 6b des Spikes 2 charakterisiert, variiert also über eine untere Längsausdehnung Lb des unteren Abschnitts 6b, insbesondere wird es zumindest bereichsweise größer. Das untere Querschnittsmaß Qb kann bei einem runden Querschnitt beispielsweise durch den Durchmesser oder bei einem nicht-runden Querschnitt durch den lichten Durchmesser oder durch eine Breite gegeben sein. Der untere Abschnitt 6b des Spikes 2 kann in axialer Richtung (bezüglich des Fahrzeugreifens 1) breiter sein als in Umfangsrichtung (bezüglich des Fahrzeugreifens 1), so dass sich in Umfangsrichtung eine gute Abstützwirkung an der Lauffläche 1a ergibt.

Gemäß der dargestellten Ausführung steigt das untere Querschnittsmaß Qb ab der Trennlinie TL zunächst stufenartig und anschließend kontinuierlich (leicht konisch) an und bleibt dann nahezu konstant, beispielsweise auf einem unteren Querschnittsmaß Qb von vorzugsweise zwischen 3mm und 7mm. Es sind aber auch andere Verläufe des unteren Querschnittsmaßes Qb denkbar, die zu einer solchen radialen Aufweitung (radial bezüglich des Spikes 2) des unteren Abschnitts 6b ab der Trennlinie TL führen, beispielsweise ein ab der Trennlinie TL linear ansteigendes Querschnittsmaß Qb bei einem konischen unteren Abschnitt 6b. Das untere Querschnittsmaß Qb kann also ab der Trennline TL bei beispielsweise zwischen 1.5mm und 7mm liegen. Die untere Längsausdehnung Lb liegt vorzugsweise zwischen 3mm und 6mm.

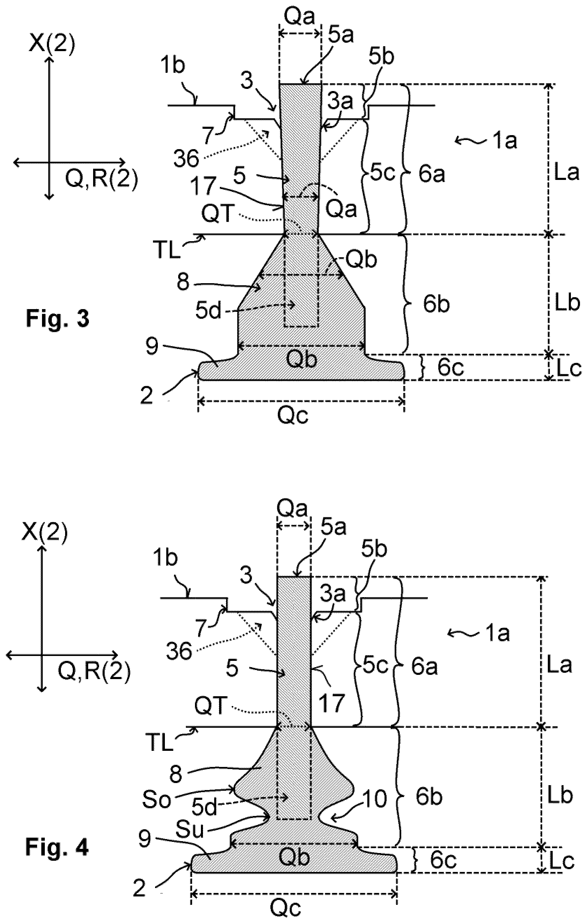

In der in Fig. 2 dargestellten Ausführungsform mit einem stufenartigen Anstieg des unteren Querschnittsmaßes Qb ab der Trennlinie TL ist das untere Querschnittsmaß Qb über die gesamte untere Längsausdehnung Lb des unteren Abschnitts 6b stets größer gleich einem Trenn-Querschnittsmaß QT, das der obere Abschnitt 6a an der (oder kurz vor der) Trennlinie TL einnimmt.. Liegt kein solch stufenartiger Anstieg des unteren Abschnitts 6b ab der Trennlinie TL vor, sondern beispielsweise ein konischer Verlauf, wie beispielhaft in Fig. 3 dargestellt, kann das untere Querschnittsmaß Qb zumindest bereichsweise auch kleiner als das obere Querschnittsmaß Qa sein, insbesondere bei einem ebenfalls konisch verlaufenden Stützabschnitt 5c des Pins 5 im oberen Abschnitt 6a des Spikes 2. In einer solchen Ausführung ist dann zumindest die Bedingung erfüllt, dass das untere Querschnittsmaß Qb ab der Trennlinie TL nach unten zum Fußbereich 6c hin größer wird, d.h. das untere Querschnittsmaß Qb ist über die gesamte untere Längsausdehnung Lb des unteren Abschnitts 6b größer oder gleich dem Trenn-Querschnittsmaß QT, das der obere Abschnitt 6a an der (oder kurz vor der) Trennlinie TL einnimmt.

In den Ausführungsformen gemäß Fig. 2 und 3 wird der untere Abschnitt 6b des Spikes 2 durch einen Unterflansch 8 gebildet. In dem und/oder mit dem Unterflansch 8 ist ein unteres Ende 5d des Pins 5, das über den Stützabschnitt 5c mit dem freien Ende 5a des Pins 5 verbunden ist, verankert (angefügt oder eingepresst) und/oder stoffschlüssig verbunden. Dabei kann das untere Ende 5d beispielsweise über eine Verankerungstiefe (Einpresstiefe) von zwischen 2.5mm und 5mm in dem Unterflansch 8 verankert sein, wie in Fig. 2 und 3 gestrichelt angedeutet. Die Trennline TL verläuft dann an einer Oberseite 8a des Unterflanschs 8, von der der verankerte und/oder stoffschlüssig verbundene Pin 5 in die Längsrichtung X nach oben hin absteht. Der Unterflansch 8 weist über die gesamte untere Längsausdehnung Lb einen entsprechenden Verlauf des unteren Querschnittsmaßes Qb wie oben beschrieben auf.

Der Unterflansch 8 geht unterseitig in einen Fußflansch 9 über, der den Fußabschnitt 6c des Spikes 2 bildet. Der Fußflansch 9 und der Unterflansch 8 sind vorzugsweise einteilig bzw. als eine bauliche Einheit gefertigt. Der Fußabschnitt 6c weist ein Fuß-Querschnittsmaß Qc auf, das die Querausdehnung in dem Fußabschnitt 6b des Spikes 2 charakterisiert. Das Fuß-Querschnittsmaß Qc kann bei einem runden Querschnitt beispielsweise durch den Durchmesser oder bei einem nicht-runden Querschnitt durch den lichten Durchmesser oder durch eine Breite gegeben sein. Der Fußflansch 9 dient der mechanischen Befestigung bzw. mechanischen Verankerung des Spikes 2 im Spikeloch 3. Um ein Herausreißen des Spikes 2 aus dem Spikeloch 3 zu verhindern, ist das Fuß-Querschnittsmaß Qc größer als das untere Querschnittsmaß Qb des unteren Abschnitts 6b des Spikes 2 und gleichzeitig auch größer als das obere Querschnittsmaß Qa des oberen Abschnitts 6a des Spikes 2. Das Fuß-Querschnittsmaß Qc kann beispielsweise zwischen 6mm und 11mm betragen. Der Fußabschnitt 6c bzw. Fußflansch 9 kann in axialer Richtung (bezüglich des Fahrzeugreifens 1) schmaler sein als in Umfangsrichtung (bezüglich des Fahrzeugreifens 1), so dass sich in Umfangsrichtung ein verlängerter Hebel ergibt, der für eine gute mechanische Verankerung in der Lauffläche 1a sorgt.

Der Unterflansch 8 und der Fußflansch 9 dienen also sowohl der sicheren Aufnahme des Pins 5 als auch der mechanischen Verankerung und dem Abstützen des Spikes 2 im Spikeloch 3. Der Unterflansch 8 und der Fußflansch 9 sind dabei aus einem weicheren und leichteren Material gefertigt als der Pin 5, beispielsweise aus Aluminium. Dadurch wird den unterschiedlichen Anforderungen an das jeweilige Material Rechnung getragen. Während der Pin 5 hohe Kräfte aufnehmen und übertragen soll, und daher aus einem Hartmetall gefertigt ist, dient der Spikekörper aus Unterflansch 8 und Fußflansch 9 dem Abstützen am und der Verankerung im Fahrzeugluftreifen 1, wobei diese Verankerung verschleißfest sein soll, um den Spike 2 mit dem harten Pin 5 über die gesamte Lebensdauer des Fahrzeugluftreifens 1 zu stützen. Dafür ist ein weicheres Material vorteilhaft, was gleichzeitig zu einer Gewichts-Ersparnis führt und für den Spike 2 insgesamt weniger Hartmetall notwendig ist. Gleichzeitig wird der Pin 5 im oberen Abschnitt 6a von der umgebenden Lauffläche 1a abgestützt, so dass keine zusätzliche Ummantelung zum Abstützen nötig ist.

Da die obere Längsausdehnung La des oberen Abschnitts 6a an die Profiltiefe PT angepasst ist, treten der Unterflansch 8 und der Fußflansch 9, wenn überhaupt erst bei sehr starker Abnutzung des Fahrzeugluftreifens 1 aus der Lauffläche 1a hervor. Die untere Längsausdehnung Lb des unteren Abschnitts 6b, beispielsweise zwischen 3mm und 6mm, und eine Fuß-Längsausdehnung Lc des Fußabschnitts 6c, beispielsweise zwischen 1mm und 2mm, sind derartig gewählt, dass diese ausreichend Berührungsfläche mit der Lauffläche 1a bieten, so dass eine sichere mechanische Verankerung des Spikes 2 im Fahrzeugluftreifen 1 gewährleistet ist. Die obere Längsausdehnung La des oberen Abschnitts 6a, die untere Längsausdehnung Lb des unteren Abschnitts 6b und die Fuß-Längsausdehnung Lc des Fußabschnitts 6c können zusammen beispielsweise zwischen 7mm und 14mm betragen, was der Gesamthöhe des jeweiligen Spikes 2 entspricht..

Die untere Längsausdehnung Lb ist gemäß der dargestellten Ausführungsform größer als die Fuß-Längsausdehnung Lc, beispielsweise gilt Lc ≈ 0.2 x Lb, wodurch Material und Gewicht gespart werden kann. Allerdings kann die Fuß-Längsausdehnung Lc auch größer gewählt werden, beispielsweise Lc ≈Lb, wodurch ein Verkippen des Spikes 2 im Betrieb des Fahrzeugluftreifens 1 verhindert werden kann, da der Spike 2 durch die größere Längsausdehnung des Fußabschnitts 6c zusätzlich gestützt wird.

Dies kann aber auch dadurch erreicht werden, dass wie in Fig. 4 dargestellt der Unterflansch 8 bei gleichbleibendem Fußflansch 9 eine zusätzliche Einkerbung 10 aufweist, so dass sich im unteren Abschnitt 6b eine zusätzliche Variation des unteren Querschnittsmaßes Qb ergibt. Das untere Querschnittsmaß Qb wird also ab der Trennlinie TL in Längsrichtung X nach unten hin zunächst größer (konisch oder abgerundet), bis zu einem oberen Scheitelpunkt So, und anschließend wieder kleiner (konisch oder abgerundet), bis zu einem unteren Scheitelpunkt Su, an dem das untere Querschnittsmaß Qb innerhalb der unteren Längsausdehnung Lb am geringsten wird. Dabei gilt gemäß der dargestellten Ausführungsform, dass das untere Querschnittsmaß Qb in dem unteren Scheitelpunkt Su nicht kleiner wird als das obere Querschnittsmaß Qa des oberen Abschnitts 6a (bei einem zylindrischen Pin 5) oder zumindest nicht größer als das Trenn-Querschnittsmaß QT, das der obere Abschnitt 6a an der Trennlinie TL einnimmt (z.B. bei einem konischen Pin 5).

Anschließend wird das untere Querschnittsmaß Qb wieder größer (konisch oder abgerundet) und der Unterflansch 8 geht in den Fußflansch 9 über. Durch diese Einkerbung 10 wird zusätzlich zum Fußabschnitt 6c bzw. zum Fußflansch 9 eine weitere Erweiterung oder Aufweitung in Querrichtung Q (oder radialer Richtung bezüglich des Spikes 2) geschaffen, die ein seitliches Verkippen des Spikes 2 verhindern kann und den Spike 2 sicher am Fahrzeugluftreifen 1 verankert.

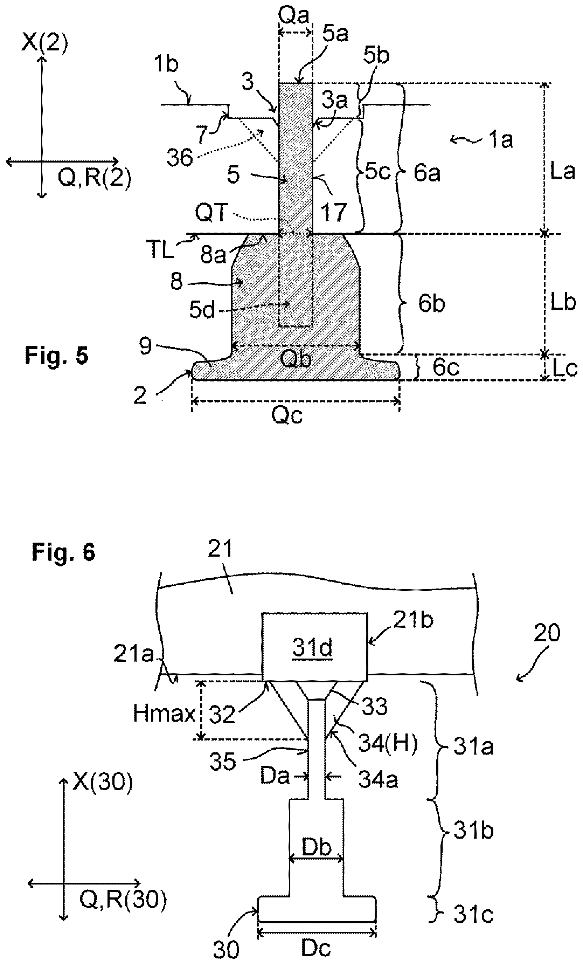

Gemäß einer in Fig. 5 dargestellten Ausführungsform können der obere Abschnitt 6a mit dem unumhüllten Pin 5 und der untere Abschnitt 6b mit dem ab der Trennlinie TL in Längsrichtung X nach unten hin größer werdenden unteren Querschnittsmaß Qb auch einteilig bzw. als ein einheitliches Bauteil gefertigt sein. Der Unterflansch 8 und der Pin 5 sind dann also aus demselben Material, vorzugsweise aus dem Hartmetall, beispielsweise Wolframcarbid, gefertigt. Dadurch ergibt sich zwar gegenüber den vorangehenden Ausführungen ein höheres Gewicht des Spikes 2 aber die Fertigung des Spikes 2 wird vereinfacht, da das Zusammenfügen von Pin 5 und Unterflansch 8 entfallen kann. Für diese Ausführung können grundsätzlich sämtliche Verläufe des oberen Querschnittsmaßes Qa, des unteren Querschnittsmaßes Qb und des Fuß-Querschnittsmaßes Qc wie für den zweiteiligen Spike 2 gemäß den vorangegangenen Ausführungen Anwendung finden.

Um einen solchen Spike 2 (in sämtlichen Ausführungsformen) sicher in dem Spikeloch 3 der Lauffläche 1a zu fixieren, kann die Außenseite des Spikes 2 optional sowohl im oberen Abschnitt 6a als auch im unteren Abschnitt 6b und im Fußabschnitt 6c des Spikes mit dem Haftvermittler 4 beschichtet und in einem anschließenden Wärmebehandlungsprozess aktiviert werden, so dass eine dauerhaltbare chemische bzw. stoffschlüssige Verbindung zwischen dem Spike 2 und der Lauffläche 1a ausgebildet wird.

Für die Herstellung oder das Formen einer Lauffläche 1a eines Fahrzeugluftreifens 1 mit Spikelöchern 3, in die insbesondere die oben beschriebenen Spikes 2 oder vergleichbare Spikes 2 mit einem schlanken oder schmalen oberen Abschnitt 6a eingesetzt werden können, ist eine Vulkanisationsvorrichtung 20 vorgesehen, die eine Reihe von in Fig. 6 dargestellten Vulkanisationssegmenten 21 aufweist, die in einer Kreisform angeordnet sind. Auf Oberflächen 21a der jeweiligen Vulkanisationselemente 21, die jeweils die unprofilierte Reifenform der Lauffläche 1 a des Fahrzeugluftreifens 1 abbilden, sind senkrecht abstehend Formstifte 30 bzw. Mold-Pins angeordnet, die beim Vulkanisationsprozess in die geformte Lauffläche 1a des Fahrzeugluftreifens 1 eintauchen, um das jeweilige Spikeloch 3 darin auszubilden.

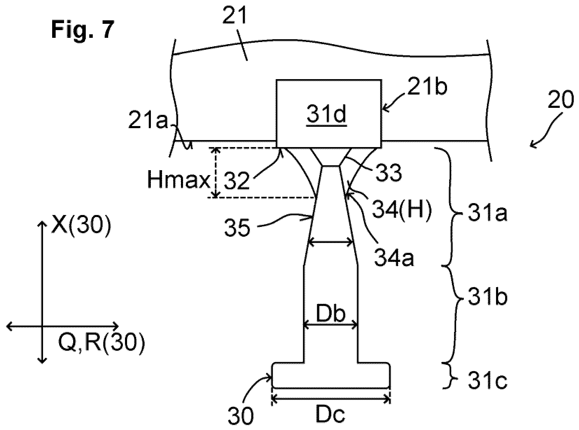

Um dabei ein Spikeloch 3 für die Form des Spikes 2 mit dem schlanken bzw. schmalen oberen Abschnitt 6a und dem breiteren unteren Abschnitt 6b sowie dem Fußabschnitt 6c bereitzustellen, weist der Formstift 30 einen oberen Formabschnitt 31a, einen unteren Formabschnitt 31b und einen Fuß-Formabschnitt 31c auf, wie in Fig. 6 und 7 dargestellt. Ferner ist ein Fixierungsabschnitt 31d vorgesehen, über den der jeweilige Formstift 30 in einer Aufnahmeöffnung 21b, beispielsweise in einem Gewindeloch oder einem konisch verlaufenden Loch, im jeweiligen Vulkanisationssegment 21 aufgenommen ist, beispielsweise eingeschraubt oder eingepresst ist. Der Formstift 30 ist dabei derartig in der Aufnahmeöffnung 21b aufgenommen, dass der oberen Formabschnitt 31a, der untere Formabschnitt 31b und der Fuß-Formabschnitt 31c senkrecht vom jeweiligen Vulkanisationssegment 21 abstehen, so dass sich ein entsprechend senkrecht in die Lauffläche 1a eintauchendes Spikeloch 3 ausbilden kann, in dem die Kontur des Formstifts 30 abgebildet ist. Der Fixierungsabschnitt 31d des Formstifts 30 steht zudem etwas aus dem jeweiligen Vulkanisierungssegment 21 heraus bzw. hervor, so dass sich ergänzend eine Stufe 7 in der Lauffläche 1a um das Spikeloch 3 ausbildet, wie in den Figuren 2 bis 5 dargestellt. Das durch einen solchen Formstift 30 ausgebildete Spikeloch 3 ist in der Regel ca. 1mm kürzer als der einzupressende Spike 2, dessen Länge je nach Anwendung beispielsweise zwischen 7mm und 14mm betragen kann.

Der Formstift 30 ist dabei derartig aus den einzelnen Abschnitten 31a, 31b, 31c, 31d zusammengesetzt, dass der Fixierungsabschnitt 31d in Längsrichtung X (bezüglich des Formstifts 30) mit dem oberen Formabschnitt 31a verbunden ist und sich nachfolgend der untere Formabschnitt 31b und der Fuß-Formabschnitt 31c anschließen. Die einzelnen Abschnitte 31a, 31b, 31c, 31d sind dabei vorzugsweise einteilig ausgeführt.

Der Fixierungsabschnitt 31d geht ausgehend von seiner Oberfläche 32 über eine konische Schulter 33 kegelstumpfförmig in den oberen Formabschnitt 31a über. Der obere Formabschnitt 31a weist einen oberen Form-Durchmesser Da von vorzugsweise zwischen 1.5mm und 4mm auf, der kleiner ist als ein unterer Form-Durchmesser Db des unteren Formabschnitts 31b von vorzugsweise zwischen 1.5mm und 7mm und eines Fuß-Durchmesser Dc des Fuß-Formabschnitts 31c von vorzugsweise zwischen 6mm bis 11mm. Der obere Formabschnitt 31a kann eine zylindrische Form mit einem konstanten oberen Form-Durchmesser Da aufweisen (s. Fig. 6) oder aber eine konische Form mit einem sich zum unteren Formabschnitt 31b hin vergrößernden oberen Form-Durchmesser Da (s. Fig. 7), wobei dies z.B. davon abhängen kann, wie der Spike 3 in den einzelnen Abschnitten 6a, 6b, 6c geformt ist. Der untere Form-Durchmesser Db ist wiederum kleiner als der Fuß-Durchmesser Dc, wobei der untere Form-Durchmesser Db wie in Fig. 6 und 7 dargestellt konstant ist.

Auf diese Weise wird der Verlauf des oben anhand der Figuren 1 bis 5 beschriebenen Spikes 2 grob nachgebildet, der in seinem oberen Abschnitt 6a ein oberes Querschnittsmaß Qa aufweist (korrespondierend zum oberen Formabschnitt 31a mit dem oberen Form-Durchmesser Da), das kleiner ist als das untere Querschnittsmaß Qb des unteren Abschnittes 6b des Spikes 2 (korrespondierend zum unteren Formabschnitt 31b mit dem unteren Form-Durchmesser Db) und als das Fuß-Querschnittsmaß Qc des Fuß-Abschnittes 6c des Spikes 2 (korrespondierend zum Fuß-Formabschnitt 31c mit dem Fuß-Durchmesser Dc).

Um nach dem Vulkanisierungsvorgang mit einem derartig schmalen bzw. schlanken oberen Formabschnitt 31a zu vermeiden, dass der Formstift 30 beim Entformen des Fahrzeugluftreifens 1 abbricht oder anderweitig beschädigt wird, ist ferner vorgesehen, dass von der Oberfläche 32 des Fixierungsabschnittes 31d mindestens zwei Lamellen 34 in Richtung des oberen Formabschnitts 31a abstehen, vorzugsweise senkrecht abstehen. Diese Lamellen 34 sind mit der kegelstumpfförmigen Schulter 33 und vor allem mit dem oberen Formabschnitt 31a des Formstifts 30 verbunden, so dass der Formstift 30 in Querrichtung Q bzw. in die radiale Richtung R (bezüglich des Formstifts 30) abgestützt wird.

Die Lamellen 34 stehen in etwa senkrecht von einer Wandung 35 des oberen Formabschnittes 31a ab, insbesondere an gegenüberliegenden Seiten. Dabei wird eine Lamellenhöhe H in Längsrichtung X (bezüglich des Formstifts 30) der jeweiligen Lamelle 34 ausgehend von der Wandung 35 des oberen Formabschnittes 31a in Querrichtung Q bzw. in radialer Richtung R (bezüglich des Formstifts 30)) nach außen hin immer geringer. Eine maximale Lammellenhöhe Hmax, die am Berührpunkt der Wandung 35 vorliegt, beträgt dabei beispielsweise zwischen 2mm und 3mm.

Eine freie Kante 34a der jeweiligen Lamelle 34, die zwischen der Oberfläche 32 des Fixierungsabschnittes 31d und der Wandung 35 des oberen Formabschnittes 31a verläuft, weist dabei einen linearen Verlauf (s. Fig. 6) oder einen abgerundeten Verlauf (s. Fig. 7) auf, so dass sich Lamellen 34 mit einer im Wesentlichen dreieckigen Form ausbilden.

Durch derartig geformte Lamellen 34 wird die Querstabilität des Formstifts 30 während des Entformens verbessert. Dadurch können auch sehr schmale oder schlanke obere Form-Durchmesser Da bei breiteren unteren Formdurchmessern Db gewählt werden, so dass entsprechend ein Spike 2 mit einem sehr schmalen oder schlanken oberen Abschnitt 6a und einem breiteren unteren Abschnitt 6b sicher in dem so ausgebildeten Spikeloch 3 eingepresst bzw. gehalten werden kann.

Weiterhin werden die Lamellen 34 aber auch in der vulkanisierten Lauffläche 1a des Fahrzeugluftreifens 1 abgebildet, wie schematisch in Fig. 2 dargestellt, so dass darin benachbart zu dem jeweiligen Spikeloch 3 lamellenartige Vertiefungen 36 oder Einkerbungen eingeformt werden, die denselben Verlauf aufweisen, wie die jeweilige Lamelle 34, d.h. dreieckig mit einem linearen oder abgerundeten Verlauf oder dergleichen. Demnach bilden sich radial angrenzend an einen oberen Endbereich 3a des Spikelochs 3 ausgehend von einer Oberfläche 1b der Lauffläche 1a, an der die Oberflächen 21a der Vulkanisationssegmente 21 sowie die Oberfläche 32 des Fixierungsabschnittes 31d anliegen, Vertiefungen 36.

Da die Lamellen 34 mit der Wandung 35 des oberen Formabschnittes 31a des Formstifts 30 verbunden sind, sind die Vertiefungen 36 in dem oberen Endbereich 3a auch mit dem Spikeloch 3 verbunden. Die Vertiefungen 36 weisen dabei am Übergang zum Spikeloch 3 eine maximale Tiefe Tmax ab der Oberfläche 1b der Lauffläche 1a auf, die in etwa der maximalen Lammellenhöhe Hmax der Lamelle 34 entspricht. Ausgehend davon wird eine Tiefe T der Vertiefung 36 korrespondierend zu der Form der freien Kante 34a bzw. des Verlaufs der Lamellenhöhe H der jeweiligen Lamelle 34 immer geringer mit größer werdendem Abstand zum Spikeloch 3.

Durch eine entsprechend gewählte Form der Lamelle 34 kann also zusätzlich die Flexibilität des Spikes 2 im Spikeloch 3 eingestellt werden, da der Spike 2 mit seinem unumhüllten oberen Abschnitt 6a im oberen Endbereich 3a des Spikelochs 3 direkt an der Lauffläche 1a anliegt. Die ausgebildeten lamellenartigen Vertiefungen 36, die insbesondere benachbart zum oberen Endbereich 3a des Spikelochs 3 liegen, haben dann also auch einen Einfluss auf das Bewegungsverhalten des eingepressten Spikes 2 in seinem oberen Abschnitt 6a. Der Einfluss auf den unteren Abschnitt 6b und den Fußabschnitt 6c ist hingegen eher marginal, da die Lamellen 34 lediglich im oberen Formabschnitt 31a des Formstifts 30 bzw. die Vertiefungen 36 lediglich oberen Endbereich 3a des Spikelochs 3 verlaufen.

Diese Einstellung des Bewegungsverhaltens des Spikes 3 über die Lamellen 34 im Formstift 30 bzw. die Vertiefungen 36 benachbart zum Spikeloch 3 im Fahrzeugluftreifen 1 ist dabei nicht nur auf den in Fig. 1 bis 5 dargestellten Spike 3 beschränkt. Auch andere Spikeformen können davon profitieren, so dass auch Formstifte 30 mit anders ausgebildeten Formabschnitten 31a, 31b, 31c (z.B. Da = Db) derartige Lamellen 34 aufweisen können.

### Bezugszeichenliste

- 1: Fahrzeugluftreifen
- 1a: Lauffläche des Fahrzeugreifens 1
- 1b: Oberfläche der Lauffläche 1a
- 2: Spike
- 3: Spikeloch
- 3a: oberer Endbereich des Spikelochs 3
- 4: Haftvermittler
- 5: Pin
- 5a: freies Ende des Pins 5
- 5b: hervorstehender Abschnitt des Pins 5
- 5c: Stützabschnitt des Pins 5
- 5d: unteres Ende des Pins 5
- 6a: oberer Abschnitt des Spikes 2
- 6b: unterer Abschnitt des Spikes 2
- 6c: Fußabschnitt des Spikes 2
- 7: Stufe
- 8: Unterflansch
- 8a: Oberseite des Unterflanschs 8
- 9: Fußflansch
- 10: Einkerbung
- 17: Außenseite des Stützabschnittes 5c des Pins 5
- 20: Vulkanisationsvorrichtung
- 21: Vulkanisationssegmente
- 21a: Oberfläche des Vulkanisationselements 21
- 21b: Aufnahmeöffnung in dem Vulkanisationselemente 21
- 30: Formstift (Mold-Pin)
- 31a: oberer Formabschnitt
- 31b: unterer Formabschnitt
- 31c: Fuß-Formabschnitt
- 31d: Fixierungsabschnitt
- 32: Oberfläche des Fixierungsabschnittes 31d
- 33: Schulter
- 34: Lamelle
- 34a: freie Kante der Lamelle 34
- 35: Wandung des oberen Formabschnittes 31a
- 36: lamellenartige Vertiefung in der Lauffläche 1a
- Da: oberer Form-Durchmesser
- Db: unterer Form-Durchmesser
- Dc: Fuß-Durchmesser
- H: Lamellenhöhe
- HMax: maximale Lamellenhöhe
- La: obere Längsausdehnung
- Lb: untere Längsausdehnung
- Lc: Fuß-Längsausdehnung
- PT: Profiltiefe
- Q: Querrichtung
- Qa: oberes Querschnittsmaß
- Qb: unteres Querschnittsmaß
- Qc: Fuß-Querschnittsmaß
- QT: Trenn-Querschnittsmaß
- R: radiale Richtung
- So: oberer Scheitelpunkt
- Su: unterer Scheitelpunkt
- T: Tiefe der Vertiefung 36
- TMax: maximale Tiefe der Vertiefung 36
- TL: Trennlinie
- U: Untergrund
- X: Längsrichtung

## Patentansprüche

1. Fahrzeugluftreifen (1) mit einer Lauffläche (1a) und in der Lauffläche (1a) angeordneten Spikelöchern (3), wobei in den Spikelöchern (3) jeweils ein Spike (2) eingebracht ist, wobei der jeweilige Spike (2) in Längsrichtung (X) aneinandergrenzend einen oberen Abschnitt (6a), einen unteren Abschnitt (6b) und einen Fußabschnitt (6c) aufweist,
wobei der obere Abschnitt (6a) des Spikes (2) durch einen Pin (5) gebildet ist,
wobei der Pin (5) innerhalb des oberen Abschnittes (6a)
- einen Stützabschnitt (5c) aufweist, der innerhalb der Lauffläche (1a) angeordnet ist und der sich mit einer Außenseite (17) direkt an der Lauffläche (1a) abstützt, und weiterhin
- einen hervorstehenden Abschnitt (5b) aufweist, der aus der Lauffläche (1a) herausragt, so dass ein freies Ende (5a) des Pins (5) von der Lauffläche (1a) hervorsteht; und
wobei ein oberes Querschnittsmaß (Qa) innerhalb des oberen Abschnittes (6a) des Spikes (2) über eine gesamte obere Längsausdehnung (La) des oberen Abschnittes (6a) kleiner ist als ein Fuß-Querschnittsmaß (Qc) des Fußabschnittes (6c) des Spikes (2) zum Verankern des jeweiligen Spikes (2) in dem Spikeloch (3), **dadurch gekennzeichnet, dass**
ein unteres Querschnittsmaß (Qb) des unteren Abschnittes (6b) des Spikes (2) größer oder gleich einem Trenn-Querschnittsmaß (QT) ist, das der obere Abschnitt (6a) an einer Trennlinie (TL) einnimmt, die den oberen Abschnitt (6a) des Spikes (2) von dem unteren Abschnitt (6b) des Spikes (2) trennt.

2. Fahrzeugluftreifen (1) nach Anspruch 1,
**dadurch gekennzeichnet, dass**
der Spike (2) einteilig oder mindestens zweiteilig gefertigt ist.

3. Fahrzeugluftreifen (1) nach Anspruch 2,
**dadurch gekennzeichnet, dass**
der Spike (2) bei einer mindestens zweiteiligen Ausführung in dem unteren Abschnitt (6b) und/oder in dem Fußabschnitt (6c) aus Aluminium gefertigt ist oder Aluminium aufweist.

4. Fahrzeugluftreifen (1) nach Anspruch 2 oder 3,
**dadurch gekennzeichnet, dass**
der Spike (2) in dem unteren Abschnitt (6b) durch einen Unterflansch (8) mit dem unteren Querschnittsmaß (Qb) gebildet ist und der Fußabschnitt (6c) durch einen Fußflansch (9) mit dem Fuß-Querschnittsmaß (Qc), wobei der Unterflansch (8) und der Fußflansch (9) einteilig gefertigt sind.

5. Fahrzeugluftreifen (1) nach Anspruch 4,
**dadurch gekennzeichnet, dass**
ein unteres Ende (5d) des Pins (5) bei
- einer mindestens zweiteiligen Ausführung des Spikes (2) an den Unterflansch (8) angefügt ist, beispielsweise in den Unterflansch (8) eingepresst und/oder mit dem Unterflansch (8) stoffschlüssig verbunden ist, und der Unterflansch (8) aus Aluminium gefertigt ist, und
- bei einer einteiligen Ausführung des Spikes (2) einteilig in den Unterflansch (8) übergeht.

6. Fahrzeugluftreifen (1) nach einem der vorhergehenden Ansprüche,
**dadurch gekennzeichnet, dass**
die Außenseite (17) des Stützabschnittes (5c) des Pins (5) innerhalb des oberen Abschnittes (6a) im Bereich des Spikeloches (3) an der Lauffläche (1a) anliegt, insbesondere über einen Haftvermittler (4) direkt mit der Lauffläche (1a) stoffschlüssig verbunden ist.

7. Fahrzeugluftreifen (1) nach einem der vorhergehenden Ansprüche,
**dadurch gekennzeichnet, dass**
das untere Querschnittsmaß (Qb) des unteren Abschnittes (6b) des Spikes (2) ausgehend von der Trennlinie (TL) in Richtung des Fußabschnittes (6c) des Spikes (2) zumindest bereichsweise größer wird.

8. Fahrzeugluftreifen (1) nach Anspruch 7,
**dadurch gekennzeichnet, dass**
das untere Querschnittsmaß (Qb) des unteren Abschnittes (6b) des Spikes (2) ausgehend von der Trennlinie (TL)
- über die gesamte untere Längsausdehnung (Lb) des unteren Abschnitts (6b) stets größer wird oder nicht kleiner wird, beispielsweise linear, gestuft oder abgerundet, oder
- zunächst bis zu einem oberen Scheitelpunkt (So) größer wird, beispielsweise linear, gestuft oder abgerundet, und anschließend bis zu einem unteren Scheitelpunkt (Su) wieder kleiner wird, beispielsweise linear, gestuft oder abgerundet, so dass sich eine Einkerbung (10) in dem Spike (2) ausbildet, wobei das untere Querschnittsmaß (Qb) in dem unteren Scheitelpunkt (Su) größer oder gleich
- dem oberen Querschnittsmaß (Qa) ist, das der obere Abschnitt (6b) über die gesamte obere Längsausdehnung (La) einnimmt, und/oder
- dem Trenn-Querschnittsmaß (QT) ist, das der obere Abschnitt (6a) an der Trennlinie (TL) einnimmt.

9. Fahrzeugluftreifen (1) nach einem der vorhergehenden Ansprüche,
**dadurch gekennzeichnet, dass**
das untere Querschnittsmaß (Qb) des unteren Abschnittes (6b) des Spikes (2) stets größer ist als das obere Querschnittsmaß (Qa) des oberen Abschnitts (6a) des Spikes (2).

10. Fahrzeugluftreifen (1) nach einem der vorhergehenden Ansprüche,
**dadurch gekennzeichnet, dass**
der obere Abschnitt (6a) des Spikes (2) konisch oder zylindrisch verläuft und/oder der untere Abschnitt (6b) des Spikes (2) konisch oder zylindrisch verläuft.

11. Fahrzeugluftreifen (1) nach einem der vorhergehenden Ansprüche,
**dadurch gekennzeichnet, dass**
die obere Längsausdehnung (La) des oberen Abschnitts (6a) des Spikes (2) größer oder gleich einer Profiltiefe (PT) der Lauffläche (1a) ist, so dass die Trennlinie (TL) unterhalb oder auf der Profiltiefe (PT) liegt, wobei die obere Längsausdehnung (La) des oberen Abschnitts (6a) des Spikes (2) beispielsweise zwischen 3mm und 10mm, vorzugsweise zwischen 4mm und 7mm, beträgt.

12. Fahrzeugluftreifen (1) nach einem der vorhergehenden Ansprüche,
**dadurch gekennzeichnet, dass**
die untere Längsausdehnung (Lb) des unteren Abschnitts (6b) und eine Fuß-Längsausdehnung (Lc) des Fußabschnitts (6c) zusammen beispielsweise mindestens 4mm, vorzugsweise zwischen 4mm und 8mm betragen, wobei die untere Längsausdehnung (Lb) vorzugsweise größer oder gleich der Fuß-Längsausdehnung (Lc) ist.

13. Fahrzeugluftreifen (1) nach einem der vorhergehenden Ansprüche,
**dadurch gekennzeichnet, dass**
das obere Querschnittsmaß (Qa) des oberen Abschnitts (6a) des Spikes (2) zwischen 1.5mm und 4mm beträgt.

14. Fahrzeugluftreifen (1) nach einem der vorhergehenden Ansprüche,
**dadurch gekennzeichnet, dass**
der Pin (5) aus einem Hartmetall gefertigt ist, beispielsweise aus Wolframcarbid.
